# EUROPEAN PATENT SPECIFICATION

(11) **EP 3 891 730 B1**
(45) Date of publication and mention of the grant of the patent: **05.07.2023**
(21) Application number: 18816012.1
(22) Date of filing: 06.12.2018
(51) Int. Cl.: G10L 15/22, G06F 3/16, G06F 3/01, G06F 3/04883

(54) **TECHNIQUE FOR GENERATING A COMMAND FOR A VOICE-CONTROLLED ELECTRONIC DEVICE**
VERFAHREN ZUR ERZEUGUNG EINES BEFEHLS FÜR EINE SPRACHGESTEUERTE ELEKTRONISCHE VORRICHTUNG
TECHNIQUE DE GÉNÉRATION D'UNE COMMANDE POUR UN DISPOSITIF ÉLECTRONIQUE À COMMANDE VOCALE

(43) Date of publication of application: 13.10.2021
(73) Proprietor: Vestel Elektronik Sanayi ve Ticaret A.S., 45030 Manisa (TR)
(72) Inventor: CUBUKCU, Baran, 45030 Manisa (TR)
(74) Representative: Kehl, Ascherl, Liebhoff & Ettmayr Patentanwälte Partnerschaft mbB
(86) International application number: PCT/EP2018/083802
(87) International publication number: WO 2020/114599

(56) References cited:
- WO-A1-2016/054230
- US-A1- 2008 153 465
- US-A1- 2008 235 029
- US-A1- 2011 081 083
- US-A1- 2013 238 312
- US-A1- 2018 113 672

## Description

### Technical Field

The present disclosure generally relates to the field of electronic devices. In particular, a technique for generating a command to be processed by a voice-controlled electronic device is presented. The technique may be embodied in a method, a computer program and an electronic device.

### Background

Speech recognition techniques - also known as "speech-to-text" techniques - have been developed over the recent decades to provide computer-implemented assistance for transcribing spoken language into text and have meanwhile been adopted in various fields of application. In particular, in recent years, speech recognition techniques have increasingly been employed for voice control of electronic devices, such as for voice control of household appliances or for the implementation of virtual assistants, i.e., software agents capable of performing tasks or providing services upon verbal request of a user. Known virtual assistants include Apple Siri, Google Assistant, Amazon Alexa and Microsoft Cortana, for example.

Voice control of electronic devices may generally reach its limits when keywords included in a voice command cannot be recognized unambiguously, so that the inputted command potentially contains unintended elements that may result in unwanted outcomes of the control being performed. Such situations may especially occur when the voice command contains terms of a different language than the default language of speech recognition, when the voice command contains terms that are not included in a vocabulary used for speech recognition, or when the voice command contains terms pronounced in an ambiguous manner by the user.

As an example, when the default language of speech recognition is English and the user attempts to input a Japanese expression as an element of a voice command (e.g., asking "what is 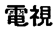 "), the recognition of the Japanese expression may fail, either due to a wrong pronunciation by the user or because recognition of the different language (which may even be based on a different character set) is not supported by the recognition engine. As another example, when a user attempts to input an uncommon name as an element of the voice command (e.g., asking "who is Vladimir Beschastnykh"), the recognition of the name may fail, either due to - again - wrong pronunciation by the user or because the name is not part of the vocabulary used for speech recognition. In a still further example, when a user attempts to input a term that - although included in the vocabulary - may result in an ambiguous transcription if pronounced unclearly, the recognition of the term may fail due to the unclear pronunciation by the user (e.g., asking "where is Vestel", but recognizing "where is vessel"). In view of these examples, it is evident that the merely verbal way of inputting a command into an electronic device may not always produce satisfying results for voice control. It is thus an object of the present disclosure to provide a technique for generating a command to be processed by a voice-controlled electronic device that avoids one or more of these, or other, problems.

Background art is disclosed in US 2008/153465 A1. This document describes methods and devices for providing a user of a mobile communications device with a mobile voice-mediated search capability. The methods and devices involve receiving an utterance from a user of the mobile device, the utterance including a search request, and using speech recognition functionality to recognize that the utterance includes a search request.

Further background art is disclosed in US 2018/113672 A1. This document describes enabling force-based interactions with an intelligent personal assistant (IPA). A computing device capable of sensing the force exerted to input touch inputs is configured with a pressure-based filter that checks pressures of touch inputs to determine which touch inputs are to be diverted to the IPA or which are to be passed on to an underlying user interface that is not related to the IPA.

### Summary

It is an object of the invention to overcome the shortcomings in the prior art. This object of the invention is solved by the independent claims. Specific embodiments are defined in the dependent claims.

According to the invention, a method for generating a command to be processed by a voice-controlled electronic device is provided. The method comprises receiving a first voice input representative of a command to be processed by the electronic device, performing incorrect speech recognition on the first voice input and transcribing the incorrectly recognized speech into text, displaying the text on a screen of the electronic device, receiving a second voice input representative of a first portion of the command to be processed by the electronic device, receiving a selection of content displayed on the screen of the electronic device, the selected content being representative of a second portion of the command to be processed by the electronic device, and generating the command based on a combination of the second voice input and the selected content.

The electronic device may be any kind of electronic device that is capable of being voice controlled. This may include consumer electronics devices, such as smartphones, tablet computers, laptops and personal computers, as well as household appliances, such as refrigerators, cookers, dishwashers, washing machines and air conditioners, for example, but is not limited thereto. The electronic device may comprise a microphone for receiving voice commands (or, more generally, voice input) and may execute an agent (e.g., a software agent) that may be configured to process the received voice commands and to take action in accordance therewith. In one implementation, the agent may be provided in the form of a virtual assistant that is capable of providing services in response to voice commands received from a user, i.e., in other words, upon verbal request of the user.

Instead of using entirely voice-based commands, according to the technique presented herein, the command to be processed corresponds to a command that is generated from a combination of voice input and content selected from a screen of the electronic device. The command is therefore created from two types of inputs, namely a voice input representative of the first portion of the command as well as visual input selected from a display (corresponding to the selection of displayed content on the screen of the electronic device) representative of the second portion of the command to be generated. The full command is then the generated by combining the first portion and the second portion of the command. Once the full command is generated, the command may be processed by the electronic device. It will be understood that, when it is referred to herein to the first portion and the second portion of the command to be generated, the terms "first" and "second" may merely differentiate the respective portions of the command to be generated but may not necessarily imply an order of (or a temporal relationship between) the respective portions of the command to be generated. It may thus be conceivable that the second portion is input before the first portion of the command and represents an initial portion of the command which is followed by the first portion of the command, or vice versa.

While performing speech recognition on voice input may suffer from ambiguous or incorrect recognition in case of unclear pronunciation or words unknown to the speech recognition engine, as described above, the selection of content on the display of the electronic device may generally provide a more accurate input method and may therefore be preferable as input method for portions of the command that are otherwise hardly recognizable from voice input. In particular, the visual selection of the content may be used for input of portions of the command that comprise a term that is of a different language than a default language of the speech recognition engine, a term that is not included in a vocabulary of the speech recognition engine and/or a term that likely results in an ambiguous transcription (e.g., a term whose average transcription ambiguity is above a predetermined threshold, as pronounced by the user, for example). By using the visual selection, the command may be created more precisely and the generation of improper command elements may generally be avoided. Unwanted outcomes of the voice control being performed may thus be prevented.

The command may correspond to any type of command that is interpretable by the electronic device. In particular, the command may correspond to a control command for controlling a function of the electronic device, such as a command for controlling the behavior of a household appliance or controlling a virtual assistant executed on the electronics device, for example. The command may correspond to a command that is input in response to activation of a voice control function of the electronic device and the command may thus reflect a command to be processed by the voice control function of the electronic device. The command may be input upon input of a hotword that activates a voice control function of the electronic device, for example. As an example, the command may correspond to a query to a virtual assistant executed on the electronic device, e.g., a query to request a service from the virtual assistant. Known hotwords for virtual assistants are "Hey Siri" in case of Apple Siri or "Ok Google" in case of Google Assistant, for example.

While it will be understood that the selection of the content on the screen of the electronic device may be made using any kind of input means, such as using a mouse or keyboard in case of a personal computer, for example, in one implementation, the screen may be a touch screen and the selection of the content may be made by a touch input on the touch screen. The touch input may correspond to a touch gesture specifying a display region on the screen where the content is to be selected. As an example, the touch input may correspond to a sliding gesture covering the content to be selected. This may involve sliding over the content (e.g., a text portion) to be selected or encircling/framing the content to be selected, for example.

The content to be selected may correspond to a portion of text currently being displayed on the screen of the electronic device. The text portion may comprise selectable text (e.g., text that is markable/selectable using common user interface functions known for common copy/paste operations) or, otherwise, the text portion may comprise non-selectable text. In the latter case, the selected content may correspond to a selected display region on the screen that contains a non-selectable text portion, wherein the text portion may form part of a non-textual display element, such as an image displayed on the screen, for example. The content to be selected may not correspond to input from a keyboard displayed on the screen of the electronic device.

Prior to combining the second voice input and the selected content (again, representing the first portion and the second portion of the command to be processed, respectively), both the second voice input and the selected content may be converted into a same format, such as into (but not limited to) text, for example. To this end, the second voice input may be transcribed into text using speech recognition. When the selected content corresponds to selectable text, the selected text may not need to be further converted. When the selected content corresponds to a display region containing non-selectable text (e.g., text contained in an image displayed on the screen), on the other hand, the selected display region may be subjected to text recognition in order to obtain a text representation of the selected content.

Therefore, in one variant, when the selection of the content comprises a selection of text (i.e., selectable text), combining the second voice input with the selected content may comprise combining a transcription of the second voice input with the selected text (e.g., concatenating the transcription of the second voice input and the selected text). In another variant, when the selection of the content comprises a selection of a display region on the screen (e.g., corresponding to an image displayed on the screen containing text to be used as the second portion of the command), combining the second voice input with the selected content may comprise performing text recognition on the selected display region to obtain text included therein as selected text, and combining a transcription of the second voice input with the selected text (e.g., concatenating the transcription of the voice input and the selected text). In other words, when the selection of the content is made by a touch input specifying the display region, the electronic device may be configured to recognize what is written in the display region and may use the recognized text as the second portion of the command to be generated. In this way, any text portion displayed on the screen may generally be selected as second portion for the command to be generated. This may include text portions displayed in web browsers or messaging applications executed on a smartphone, for example, and a word or phrase to be used as second portion of the command may simply be selected by a touch on the word or phrase on the screen, for example.

In one implementation, the language of the transcription of the voice inputs and the language of the selected text may be different. Also, a character set of the transcription of the voice inputs and the character set of the selected text may be different. Therefore, as an example, although both the language and the character set of the transcription of the voice inputs may be based on English language, the user may select text that is displayed in Japanese language as second portion for the command to be generated. As a mere example, the user may say "what is" as the second voice input representing the first portion of the command and then select " 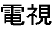 " on the screen representing the second input of the command so that the full command "what is 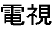 " is generated. In a similar use case, a user may use a camera application of the electronic device to capture an image of content of interest and select a region in the captured image to be used as second portion of the command to be generated. For example, a user may capture a Japanese signboard, say "what is" and slide his finger over the Japanese text of the signboard on the captured image to generate a corresponding command to be processed by the electronic device.

In some implementations, the second voice input may include an instruction to be processed by the electronic device, wherein the selected content may correspond to a parameter associated with the instruction. As an example, the instruction may correspond to a copying operation and the parameter associated with the instruction may correspond to an item to be copied. For example, if a user reads a webpage and would like to share a text portion of the webpage with friends, the user may say "copy the words" and select the desired text portion on the screen to generate a corresponding command. When processing the command, the electronic device may copy the selected text portion into the clipboard of the electronic device, ready to be pasted somewhere else in order to be shared with friends.

It will be understood that receiving the second voice input representative of the first portion of the command and receiving the selection of the content representative of the second portion of the command is performed as a fallback procedure to a failed attempt to transcribe the command as a full voice command. According to the invention, the selection of the content is thus received upon failure to correctly transcribe the first voice input representing the content. Failure to correctly transcribe the first voice input is determined by the user upon review of the transcription of the first voice input on the screen.

If the first portion of the command represents an initial portion of the command that is to be input before the second portion of the command, the electronic device may also recognize that the second voice input received in the first step may not yet represent a full command (e.g., saying "what is" without any further specification) and the electronic device may therefore be configured to wait for additional input from the user. Upon recognizing that the second voice input representative of the first portion of the comment does not represent a full command, the electronic device may thus wait for the selection of the content. In one such variant, the electronic device may actively prompt the user to perform the selection of the content on the screen when detecting that the full command is not yet available.

According to a second aspect, a computer program product is provided. The computer program product comprises program code portions for performing the method of the first aspect when the computer program product is executed on one or more computing devices. The computer program product may be stored on a computer readable recording medium, such as a semiconductor memory, DVD, CD-ROM, or the like.

According to a third aspect, a voice-controlled electronic device for generating a command to be processed by the electronic device is provided. The electronic device comprises at least one processor and at least one memory, wherein the at least one memory contains instructions executable by the at least one processor such that the electronic device is operable to perform the method steps presented herein with respect to the first aspect.

All of the aspects described herein may be implemented by hardware circuitry and/or by software. Even if some of the aspects are described herein with respect to the electronic device, these aspects may also be implemented as a method or as a computer program for performing or executing the method. Likewise, aspects described as or with reference to a method may be realized by components or processing means of the electronic device, or by means of the computer program.

### Brief Description of the Drawings

In the following, the present disclosure will further be described with reference to exemplary implementations illustrated in the figures, in which:
- Figure 1: schematically illustrates an exemplary hardware composition of a voice-controlled electronic device according to the present disclosure;
- Figure 2: illustrates a flowchart of a method which may be performed by the electronic device of Figure 1; and
- Figure 3: illustrates an exemplary selection of content displayed on a screen of an electronic device according to the present disclosure.

### Detailed Description

In the following description, for purposes of explanation and not limitation, specific details are set forth in order to provide a thorough understanding of the present disclosure. It will be apparent to one skilled in the art that the present disclosure may be practiced in other implementations that depart from these specific details.

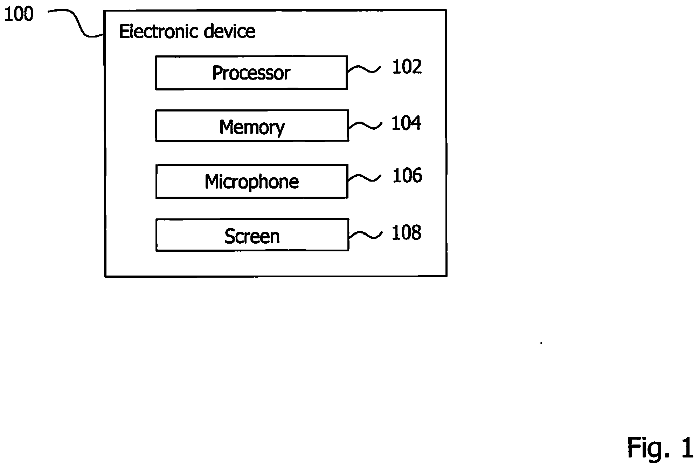

Figure 1 illustrates an exemplary hardware composition of the electronic device 100. The electronic device 100 comprises at least one processor 102 and at least one memory 104, wherein the at least one memory 104 contains instructions executable by the at least one processor such that the electronic device is operable to carry out the functions, services or steps described herein below. The electronic device 100 may be any kind of electronic device that is capable of being voice controlled. This may include consumer electronic devices, such as smartphones, tablets computers, laptops and personal computers, as well as household appliances, such as refrigerators, cookers, dishwashers, washing machines and air conditioners, for example, but is not limited thereto. The electronic device 100 comprises a microphone 106 for receiving voice commands (or, more generally, a voice input) and may execute an agent (e.g., a software agent) that may be configured to process the received voice commands and to take action in accordance therewith. In one implementation, the agent may be provided in the form of a virtual assistant that is capable of providing services in response to voice commands from a user, i.e., in other words, upon verbal request of the user. The electronic device 100 further comprises a screen 108 for displaying content that may be selectable for the user.

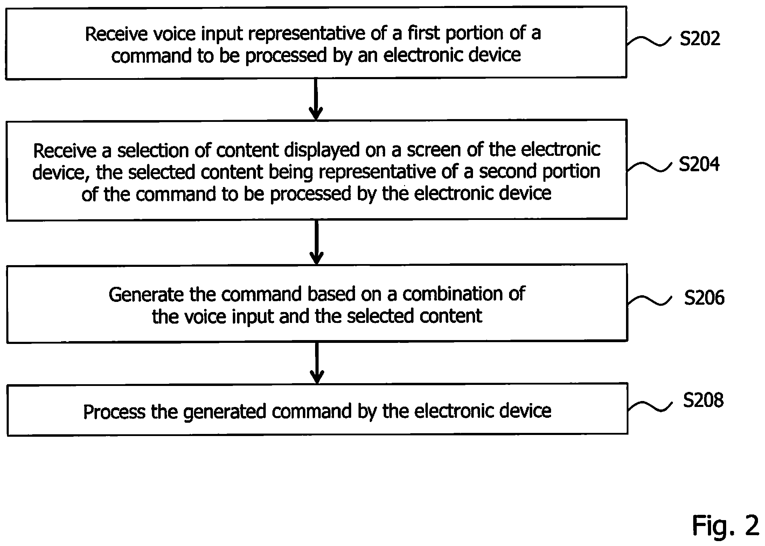

Figure 2 illustrates a method which may be performed by the electronic device 100 according to the present disclosure. The method is dedicated to generating a command to be processed by the electronic device 100 and comprises receiving, in step S202, a second voice input representative of a first portion of a command to be processed by the electronic device 100, receiving, in step S204, a selection of content displayed on a screen of the electronic device 100, the selected content being representative of a second portion of the command to be processed by the electronic device 100, and generating, in step S206, the command based on a combination of the second voice input and the selected content. Finally, in step S208, the generated command may be processed by the electronic device 100.

Instead of using entirely voice-based commands, according to the technique presented herein, the command to be processed by the electronic device 100 corresponds to a command that is generated from a combination of voice input and content selected from the screen 108 of the electronic device 100. The command is therefore created from two types of inputs, namely a voice input representative of a first portion of the command as well as a visual input selected from a display (corresponding to the selection of displayed content on the screen 108 of the electronic device 100) representative of a second portion of the command to be generated. The full command is then generated by combining the first portion and the second portion of the command. It will be understood that, when it is referred to herein to the first portion and the second portion of the command to be generated, the terms "first" and "second" may merely differentiate the respective portions of the command to be generated but may not necessarily imply an order of (or a temporal relationship between) the respective portions of the command to be generated. It may thus be conceivable that the second portion is input before the first portion of the command and represents an initial portion of the command which is followed by the first portion of the command, or vice versa.

While performing speech recognition on voice input may suffer from ambiguous or incorrect recognition in case of unclear pronunciation or words unknown to the speech recognition engine, as described above, the selection of content on the display of the electronic device 100 may generally provide a more accurate input method and may therefore be preferable as input method for portions of the command that are otherwise hardly recognizable from voice input. In particular, the visual selection of the content may be used for input of portions of the command that comprise a term that is of a different language than a default language of the speech recognition engine, a term that is not included in a vocabulary of the speech recognition engine and/or a term that likely results in an ambiguous transcription (e.g., a term whose average transcription ambiguity is above a predetermined threshold, as pronounced by the user, for example). By using the visual selection, the command may be created more precisely and the generation of improper command elements may generally be avoided. Unwanted outcomes of the voice control being performed may thus be prevented.

The command may correspond to any type of command that is interpretable by the electronic device 100. In particular, the command may correspond to a control command for controlling a function of the electronic device 100, such as a command for controlling the behavior of a household appliance or controlling a virtual assistant executed on the electronics device 100, for example. The command may correspond to a command that is input in response to activation of a voice control function of the electronic device 100 and the command may thus reflect a command to be processed by the voice control function of the electronic device 100. The command may be input upon input of a hotword that activates a voice control function of the electronic device 100, for example. As an example, the command may correspond to a query to a virtual assistant executed on the electronic device 100, e.g., a query to request a service from the virtual assistant. Known hotwords for virtual assistants are "Hey Siri" in case of Apple Siri or "Ok Google" in case of Google Assistant, for example.

While it will be understood that the selection of the content on the screen 108 of the electronic device 100 may be made using any kind of input means, such as using a mouse or keyboard in case of a personal computer, for example, in one implementation, the screen 108 may be a touch screen and the selection of the content may be made by a touch input on the touch screen. The touch input may correspond to a touch gesture specifying a display region on the screen 108 where the content is to be selected. As an example, the touch input may correspond to a sliding gesture covering the content to be selected. This may involve sliding over the content (e.g., a text portion) to be selected or encircling/framing the content to be selected, for example.

The content to be selected may correspond to a portion of text currently being displayed on the screen 108 of the electronic device 100. The text portion may comprise selectable text (e.g., text that is markable/selectable using common user interface functions known for common copy/paste operations) or, otherwise, the text portion may comprise non-selectable text. In the latter case, the selected content may correspond to a selected display region on the screen 108 that contains a non-selectable text portion, wherein the text portion may form part of a non-textual display element, such as an image displayed on the screen, for example. The content to be selected may not correspond to input from a keyboard displayed on the screen of the electronic device 100.

Prior to combining the second voice input and the selected content (again, representing the first portion and the second portion of the command to be processed, respectively), both the second voice input and the selected content may be converted into a same format, such as into (but not limited to) text, for example. To this end, the second voice input may be transcribed into text using speech recognition. When the selected content corresponds to selectable text, the selected text may not need to be further converted. When the selected content corresponds to a display region containing non-selectable text (e.g., text contained in an image displayed on the screen), on the other hand, the selected display region may be subjected to text recognition in order to obtain a text representation of the selected content.

Therefore, in one variant, when the selection of the content comprises a selection of text (i.e., selectable text), combining the second voice input with the selected content may comprise combining a transcription of the second voice input with the selected text (e.g., concatenating the transcription of the second voice input and the selected text). In another variant, when the selection of the content comprises a selection of a display region on the screen 108 (e.g., corresponding to an image displayed on the screen 108 containing text to be used as the second portion of the command), combining the second voice input with the selected content may comprise performing text recognition on the selected display region to obtain text included therein as selected text, and combining a transcription of the second voice input with the selected text (e.g., concatenating the transcription of the voice input and the selected text). In other words, when the selection of the content is made by a touch input specifying the display region, the electronic device 100 may be configured to recognize what is written in the display region and may use the recognized text as the second portion of the command to be generated. In this way, any text portion displayed on the screen 108 may generally be selected as second portion for the command to be generated. This may include text portions displayed in web browsers or messaging applications executed on a smartphone, for example, and a word or phrase to be used as second portion of the command may simply be selected by a touch on the word or phrase on the screen, for example.

In one implementation, the language of the transcription of the voice inputs and the language of the selected text may be different. Also, a character set of the transcription of the voice inputs and the character set of the selected text may be different. Therefore, as an example, although both the language and the character set of the transcription of the voice inputs may be based on English language, the user may select text that is displayed in Japanese language as second portion for the command to be generated. As a mere example, the user may say "what is" as the second voice input representing the first portion of the command and then select " 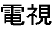 " on the screen representing the second input of the command so that the full command "what is 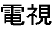 " is generated. In a similar use case, a user may use a camera application of the electronic device 100 to capture an image of content of interest and select a region in the captured image to be used as second portion of the command to be generated. For example, a user may capture a Japanese signboard, say "what is" and slide his finger over the Japanese text of the signboard on the captured image to generate a corresponding command to be processed by the electronic device.

In some implementations, the voice input may include an instruction to be processed by the electronic device 100, wherein the selected content may correspond to a parameter associated with the instruction. As an example, the instruction may correspond to a copying operation and the parameter associated with the instruction may correspond to an item to be copied. For example, if a user reads a webpage and would like to share a text portion of the webpage with friends, the user may say "copy the words" and select the desired text portion on the screen to generate a corresponding command. When processing the command, the electronic device may copy the selected text portion into the clipboard of the electronic device 100, ready to be pasted somewhere else in order to be shared with friends.

It will be understood that receiving the second voice input representative of the first portion of the command and receiving the selection of the content representative of the second portion of the command is performed as a fallback procedure to a failed attempt to transcribe the command as a full voice command. The selection of the content is thus received upon failure to correctly transcribe the first voice input representing the content. Failure to correctly transcribe the first voice input is determined by the user upon review of the transcription of the first voice input on the screen 108.

If the first portion of the command represents an initial portion of the command that is to be input before the second portion of the command, the electronic device 100 may also recognize that the second voice input received in the first step may not yet represent a full command (e.g., saying "what is" without any further specification) and the electronic device 100 may therefore be configured to wait for additional input from the user. Upon recognizing that the second voice input representative of the first portion of the comment does not represent a full command, the electronic device 100 may thus wait for the selection of the content. In one such variant, the electronic device 100 may actively prompt the user to perform the selection of the content on the screen 108 when detecting that the full command is not yet available.

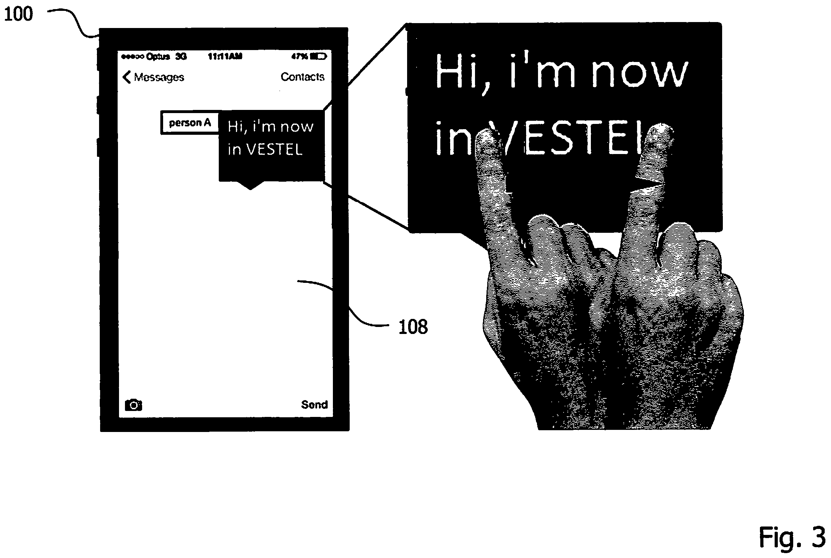

Figure 3 illustrates an exemplary selection of content displayed on a screen 108 of an electronic device 100 which, in the figure, is given as a smartphone having a touch screen. In the shown example, it is assumed that the user of the smartphone 100 communicates with person "A" via a messaging application. As shown, the user may have received a message from person A saying "Hi, I'm now in VESTEL". Assuming that the user does not know where VESTEL is, the user may then ask the virtual assistant of the smartphone 100 "where is VESTEL" (first voice input). Due to a not fully clear pronunciation by the user, the virtual assistant may incorrectly recognize "where is vessel" as voice command input by the user (not shown in the figure). In order to correct this improper recognition, the user may repeat his question, but this time using the technique presented herein. The user may therefore say "where is" (second voice input) and the virtual assistant may recognize that "where is" does not yet represent a full command. The virtual assistant may thus wait for additional input from the user. As shown in the figure, the additional input is then provided by sliding the user's finger on the screen 108 over the word "VESTEL" in order to select the word "VESTEL" as subsequent input for the command to be generated. The virtual assistant may then combine the second voice input "where is" with the content selection "VESTEL" in order to obtain the full command "where is VESTEL". After that, the virtual assistant may process the command and provide a corresponding answer to the user's question. In this way, it is made sure that the user obtains an answer to a correct question, rather than to the initially recognized and improper question "where is vessel".

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A method for generating a command to be processed by a voice-controlled electronic device (100), the method comprising:
receiving a first voice input representative of a command to be processed by the electronic device (100);
performing incorrect speech recognition on the first voice input and transcribing the incorrectly recognized speech into text;
displaying the text on a screen (108) of the electronic device (100);
receiving (S202) a second voice input representative of a first portion of the command to be processed by the electronic device (100);
receiving (S204) a selection of content displayed on the screen (108) of the electronic device (100), the selected content being representative of a second portion of the command to be processed by the electronic device (100); and
generating (S206) the command based on a combination of the second voice input and the selected content.

2. The method of claim 1, wherein the command corresponds to a query to a virtual assistant executed on the electronic device (100).

3. The method of claim 1 or 2, wherein the screen (108) is a touch screen and wherein the selection of the content is made by a touch input on the touch screen.

4. The method of claim 3, wherein the touch input corresponds to a sliding gesture covering the content to be selected.

5. The method of any one of claims 1 to 4, wherein, when the selection of the content comprises a selection of text, combining the second voice input with the selected content comprises:
combining a transcription of the second voice input with the selected text.

6. The method of any one of claims 1 to 4, wherein, when the selection of the content comprises a selection of a display region on the screen (108), combining the second voice input with the selected content comprises:
performing text recognition on the selected display region to obtain text included therein as selected text; and
combining a transcription of the second voice input with the selected text.

7. The method of claim 5 or 6, wherein a language of the transcription of the first and second voice inputs and a language of the selected text are different.

8. The method of any one of claims 5 to 7, wherein a character set of the transcription of the first and second voice inputs and a character set of the selected text are different.

9. The method of any one of claims 1 to 8, wherein the second voice input includes an instruction to be processed by the electronic device (100) and wherein the selected content corresponds to a parameter associated with the instruction.

10. The method of any one of claims 1 to 9, wherein, upon recognizing that the second voice input representative of the first portion of the command does not represent a full command, the electronic device (100) waits for the selection of the content.

11. A computer program product comprising program code portions for performing the method of any one of claims 1 to 10 when the computer program product is executed on one or more computing devices.

12. The computer program product of claim 11, stored on a computer readable recording medium.

13. A voice-controlled electronic device (100) for generating a command to be processed by the electronic device (100), the electronic device (100) comprising at least one processor (102), a screen, and at least one memory (104), the at least one memory (104) containing instructions executable by the at least one processor (102) such that the electronic device (100) is operable to perform the method of any one of claims 1 to 10.

## Patentansprüche

1. Verfahren zum Erzeugen eines Befehls, der von einer sprachgesteuerten elektronischen Vorrichtung (100) verarbeitet werden soll, wobei das Verfahren Folgendes aufweist
Empfangen einer ersten Spracheingabe, die einen von der elektronischen Vorrichtung (100) zu verarbeitenden Befehl repräsentiert;
Durchführen einer fehlerhaften Spracherkennung an der ersten Spracheingabe und Transkribieren der fehlerhaft erkannten Sprache in Text;
Anzeigen des Textes auf einem Bildschirm (108) der elektronischen Vorrichtung (100);
Empfangen (S202) einer zweiten Spracheingabe, die einen ersten Teil des von der elektronischen Vorrichtung (100) zu verarbeitenden Befehls repräsentiert;
Empfangen (S204) einer Auswahl des auf dem Bildschirm (108) der elektronischen Vorrichtung (100) angezeigten Inhalts, wobei der ausgewählte Inhalt einen zweiten Teil des von der elektronischen Vorrichtung (100) zu verarbeitenden Befehls repräsentiert; und Erzeugen (S206) des Befehls auf Grundlage einer Kombination aus der zweiten Spracheingabe und dem ausgewählten Inhalt.

2. Das Verfahren nach Anspruch 1, wobei der Befehl einer Abfrage an einen virtuellen Assistenten entspricht, die auf der elektronischen Vorrichtung (100) ausgeführt wird.

3. Das Verfahren nach Anspruch 1 oder 2, wobei der Bildschirm (108) ein Touchscreen ist und wobei die Auswahl des Inhalts durch eine Toucheingabe auf dem Touchscreen erfolgt.

4. Verfahren nach Anspruch 3, wobei die Berührungseingabe einer gleitenden Geste entspricht, die den auszuwählenden Inhalt abdeckt.

5. Verfahren nach einem der Ansprüche 1 bis 4, wobei, wenn die Auswahl des Inhalts eine Auswahl von Text aufweist, das Kombinieren der zweiten Spracheingabe mit dem ausgewählten Inhalt aufweist:
Kombinieren einer Transkription der zweiten Spracheingabe mit dem ausgewählten Text.

6. Verfahren nach einem der Ansprüche 1 bis 4, wobei, wenn die Auswahl des Inhalts eine Auswahl eines Anzeigebereichs auf dem Bildschirm (108) aufweist, das Kombinieren der zweiten Spracheingabe mit dem ausgewählten Inhalt Folgendes aufweist
Durchführen einer Texterkennung für den ausgewählten Display-Bereich, um den darin enthaltenen Text als ausgewählten Text zu erhalten; und
Kombinieren einer Transkription der zweiten Spracheingabe mit dem ausgewählten Text.

7. Verfahren nach Anspruch 5 oder 6, wobei eine Sprache der Transkription der ersten und zweiten Spracheingabe und eine Sprache des ausgewählten Textes unterschiedlich sind.

8. Verfahren nach einem der Ansprüche 5 bis 7, bei dem ein Zeichensatz der Transkription der ersten und zweiten Spracheingabe und ein Zeichensatz des ausgewählten Textes unterschiedlich sind.

9. Verfahren nach einem der Ansprüche 1 bis 8, wobei die zweite Spracheingabe einen von der elektronischen Vorrichtung (100) zu verarbeitenden Befehl umfasst und wobei der ausgewählte Inhalt einem mit dem Befehl verbundenen Parameter entspricht.

10. Verfahren nach einem der Ansprüche 1 bis 9, bei dem die elektronische Vorrichtung (100), nachdem sie erkannt hat, dass die zweite Spracheingabe, die den ersten Teil des Befehls repräsentiert, keinen vollständigen Befehl darstellt, auf die Auswahl des Inhalts wartet.

11. Computerprogrammprodukt, das Programmcodeabschnitte zur Durchführung des Verfahrens nach einem der Ansprüche 1 bis 10 aufweist, wenn das Computerprogrammprodukt auf einer oder mehreren rechnergestützten Vorrichtungen ausgeführt wird.

12. Das Computerprogrammprodukt nach Anspruch 11, gespeichert auf einem computerlesbaren Aufzeichnungsmedium.

13. Sprachgesteuerte elektronische Vorrichtung (100) zum Erzeugen eines von der elektronischen Vorrichtung (100) zu verarbeitenden Befehls, wobei die elektronische Vorrichtung (100) mindestens einen Prozessor (102), einen Bildschirm und mindestens einen Speicher (104) aufweist, wobei der mindestens eine Speicher (104) Befehle enthält, die von dem mindestens einen Prozessor (102) ausgeführt werden können, so dass die elektronische Vorrichtung (100) betreibbar ist, um das Verfahren nach einem der Ansprüche 1 bis 10 durchzuführen.

## Revendications

1. Méthode de génération d'une commande à traiter par un dispositif électronique à commande vocale (100), la méthode comprenant :
la réception d'une première entrée vocale représentative d'une commande à traiter par le dispositif électronique (100) ;
effectuer une reconnaissance vocale incorrecte sur la première entrée vocale et transcrire la parole incorrectement reconnue en texte ;
afficher le texte sur un écran (108) du dispositif électronique (100) ;
réception (S202) d'une deuxième entrée vocale représentative d'une première partie de la commande à traiter par le dispositif électronique (100) ;
réception (S204) d'une sélection de contenu affichée sur l'écran (108) du dispositif électronique (100), le contenu sélectionné étant représentatif d'une deuxième partie de la commande à traiter par le dispositif électronique (100) ; et
générer (S206) la commande sur la base d'une combinaison de la deuxième entrée vocale et du contenu sélectionné.

2. La méthode de la revendication 1, dans laquelle la revendication correspond à une requête à un assistant virtuel exécutée sur le dispositif électronique (100).

3. La méthode de la revendication 1 ou 2, dans laquelle l'écran (108) est un écran tactile et dans laquelle la sélection du contenu est effectuée par une entrée tactile sur l'écran tactile.

4. La méthode de la revendication 3, dans laquelle l'entrée tactile correspond à un geste de glissement recouvrant le contenu à sélectionner.

5. La méthode de l'une quelconque des revendications 1 à 4, dans laquelle, lorsque la sélection du contenu comprend une sélection de texte, la combinaison de la seconde entrée vocale avec le contenu sélectionné comprend :
combiner une transcription de la deuxième entrée vocale avec le texte sélectionné.

6. La méthode de l'une quelconque des revendications 1 à 4, dans laquelle, lorsque la sélection du contenu comprend une sélection d'une région d'affichage sur l'écran (108), la combinaison de la seconde entrée vocale avec le contenu sélectionné comprend :
effectuer une reconnaissance de texte sur la zone d'affichage sélectionnée pour obtenir le texte inclus dans cette zone en tant que texte sélectionné ; et
combiner une transcription de la deuxième entrée vocale avec le texte sélectionné.

7. La méthode de la revendication 5 ou 6, dans laquelle une langue de la transcription de la première et de la deuxième entrée vocale et une langue du texte sélectionné sont différentes.

8. La méthode de l'une des revendications 5 à 7, dans laquelle un jeu de caractères de la transcription des première et deuxième entrées vocales et un jeu de caractères du texte sélectionné sont différents.

9. La méthode de l'une quelconque des revendications 1 à 8, dans laquelle la deuxième entrée vocale comprend une instruction à traiter par le dispositif électronique (100) et dans laquelle le contenu sélectionné correspond à un paramètre associé à l'instruction.

10. La méthode de l'une des revendications 1 à 9, dans laquelle, après avoir reconnu que la deuxième entrée vocale représentative de la première partie de la commande ne représente pas une commande complète, le dispositif électronique (100) attend la sélection du contenu.

11. Produit programme d'ordinateur comprenant des portions de code de programme pour exécuter la méthode de l'une des revendications 1 à 10 lorsque le produit programme d'ordinateur est exécuté sur un ou plusieurs dispositifs informatiques.

12. Le produit de programme informatique de la revendication 11, stocké sur un support d'enregistrement lisible par ordinateur.

13. Dispositif électronique (100) à commande vocale pour générer une commande à traiter par le dispositif électronique (100), le dispositif électronique (100) comprenant au moins un processeur (102), un écran et au moins une mémoire (104), la au moins une mémoire (104) contenant des instructions exécutables par le au moins un processeur (102) de sorte que le dispositif électronique (100) est apte à exécuter la méthode de l'une quelconque des revendications 1 à 10.
